# FASCICULE DE BREVET EUROPEEN

(11) **EP 0 498 750 B1**
(45) Date de publication et mention de la délivrance du brevet: **07.06.1995**
(21) Numéro de dépôt: 92460005.9
(22) Date de dépôt: 31.01.1992
(51) Int. Cl.: B01F 3/04, C02F 3/20, C02F 7/00

(54) **Installation de mélange de deux phases fluides par agitation mécanique, notamment pour le traitement des eaux par transfert de gaz oxydant, et utilisation d'une telle installation**
Anlage zum Mischen zweier fluider Phasen durch mechanisches Rühren, insbesondere für die Wasserbehandlung durch Übertragung von oxydierendem Gas und Verwendung einer solchen Anlage
Plant for mixing two fluid phases by mechanical stirring, particularly for water treating by transfer of oxidizing gas and use of the same

(30) Priorité: 04.02.1991 FR 9101352
(43) Date de publication de la demande: 12.08.1992
(73) Titulaire: GIE ANJOU-RECHERCHE, F-78600 Maisons Laffitte (FR)
(72) Inventeur: Laplace, Christian, F-92700 Colombes (FR); Martin, Nathalie, F-75013 Paris (FR); Faivre, Michel, F-78260 Acheres (FR)
(74) Mandataire: Corlau, Vincent

(56) Documents cités:
- EP-A- 0 264 905
- GB-A- 2 033 772
- PATENT ABSTRACTS OF JAPAN vol. 13, no. 379 (C-628)(3727), 22 août 1989; & JP - A - 1130796 (SHINKO PFAUDLER CO LTD) 23.05.1989
- PATENT ABSTRACTS OF JAPAN vol. 3, no. 88 (M-67), 27juillet 1979; & JP - A - 5463457 (HITACHI SEISAKUSHO K.K.) 22.05.1979

## Description

Le domaine de l'invention est celui des installations de mélange de fluide, au moyen d'un système d'agitation du mélange. Plus particulièrement, l'installation de l'invention est destinée au mélange d'une phase liquide avec une phase gazeuse, permettant d'optimiser le contact entre les deux phases.

L'invention trouve une application préférentielle pour le traitement des eaux stockées, usées ou filtrées, par transfert d'un gaz oxydant dans ces eaux. Il présente dans ce cas les fonctions d'un turbo réacteur à transfert de masse.

Toutefois, l'homme du métier pourra envisager d'en utiliser le principe pour le traitement d'autres liquides, ou encore pour d'autres mélanges de fluides.

Le traitement d'eau en vue de la distribution d'eau de consommation, compte tenu des normes aujourd'hui en vigueur, a les objectifs principaux suivants:
- éliminer les matières en suspension,
- éliminer les matières organiques,
- éliminer les ions gênants,
- stériliser.

La chaîne de traitement classique comprend la plupart du temps une succession d'étapes physico-chimiques du type coagulation-floculation-décantation-filtration.

A la suite de l'opération de filtration, on sait que l'eau doit être ensuite débarrassée des micro-organismes pathogènes à l'aide d'oxydants (ozone, chlore...) ou de rayonnements (U.V) ou encore d'un traitement d'affinage au charbon actif en grains ou en poudre (élimination des micropolluants, des métaux lourds à l'état de trace, et des mauvais goûts et saveurs).

L'utilisation de l'ozone est reconnue non seulement comme efficace dans les conditions bactéricides et virulicides, mais aussi dans des étapes de traitement combinés ozonation-coagulation, ozonation-flottation, ozonation-adsorption sur média filtrant (avec possibilité d'activité biologique sur le filtre), sans oublier les applications plus classiques telles que la déferrisation-démanganisation ou l'élimination de la couleur des goûts et des odeurs. Enfin, on sait que l'ozone possède une action oxydante sur un certain nombre de micropolluants (phénols, certains détergents,...) (voir B. Langlais, "Nouveau développement de l'ozonation en eau potable et technologie appropriée" *in* L'eau l'industrie, les nuisances, n° 109, avril 1987, pp. 28 à 30).

On connaît plusieurs types de mélangeurs utilisés dans les chaînes de traitement des eaux. Ces mélangeurs peuvent être constitués par des systèmes d'injection (poreux, diffuseurs déprimogènes, émulseurs (encore appelés trompes à vide ou hydro-injecteurs)), des mélangeurs statiques, ou des mélangeurs dynamiques (par exemple à agitateur, ou turbine entraînés).

Ces mélangeurs connus sont généralement situés en amont de cuves de contact (encore appelées contacteurs) conçues de façon à maintenir, pendant une période de temps prédéterminée, le gaz oxydant en contact avec le flux de liquide à traiter.

Ainsi, à titre d'exemple, la demande de brevet française n° 90 06969 du 31 mai 90 au nom du même déposant, et non publiée à la date de dépôt de la présente demande, décrit une installation comprenant par exemple successivement un transféreur d'adjonction du gaz de traitement au liquide à traiter, un module de dissolution forcée du gaz de traitement dans le liquide, et un module contacteur. Le module de dissolution forcée décrit dans ce document est constitué par un dispositif recirculateur constitué d'une cuve comprenant une première chambre centrale formant cheminée d'épuisement des gaz, et une seconde chambre annulaire de recirculation coaxiale à la cheminée d'épuisement. Les deux chambres sont séparées par une paroi, et communiquent entre elles à leurs parties inférieure et supérieure de façon à permettre la recirculation du milieu de traitement par passage cyclique de l'une à l'autre. Les documents EP-A-0264905 et JP-A-5463457 decrivent quant à eux à turbines en forme d'hélice
La présente invention a pour objectif de fournir un dispositif recirculateur, non seulement nouveau, mais également perfectionné par rapport à celui de ce document antérieur, de façon à accroître l'efficacité de la dissolution forcée du gaz de traitement dans le liquide à traiter.

Un autre objectif de l'invention est de fournir une telle installation qui comporte des moyens intégrés et optimisés d'injection du gaz de traitement dans le mélange.

Un objectif complémentaire est de fournir une telle installation qui améliore non seulement la dissolution du gaz de traitement dans le liquide, mais diminue également le temps de contact nécessaire au transfert de masse entre les deux phases.

Un autre objectif de l'invention est de fournir une telle installation qui puisse être située en amont de contacteurs, ou encore joue le rôle de mélangeur d'appoint, après une première cuve de contact où la teneur en ozone résiduel serait trop faible, et nécessiterait une réinjection d'ozone, par exemple par dispersion du ciel gazeux issu de cette première cuve.

L'invention a encore pour objectif de fournir une telle installation qui offre une bonne maîtrise du rendement de transfert du gaz de traitement dans la phase liquide, avec une grande souplesse de régulation due non seulement aux nombreuses possibilités de configuration du dimensionnement des éléments constitutifs de l'installation, mais également, dans certaines variantes, du paramètrage possible des conditions de fonctionnement pour une installation donnée.

Ces objectifs, ainsi que d'autres qui apparaîtront par la suite, sont atteints, selon l'invention, à l'aide d'une installation de mélange de deux phases fluides, notamment d'un fluide de traitement avec un fluide à traiter, constituée d'une cuve comprenant deux chambres parallèles concentriques, communiquant entre elles au moins par leurs extrémités, la chambre centrale étant pourvue :
- d'une part d'au moins deux turbines étagées, dont l'axe de rotation se confond avec l'axe de symétrie de l'installation et dont les pales sont en tôles ajourées
- d'autre part de structures formant contrepales placées en position alternée avec les turbines.

A l'aide d'une telle structure, on constate une bonne efficacité du transfert, particulièrement lorsque le fluide de traitement est un gaz, et le fluide à traiter un liquide. L'efficacité provient vraisemblablement de l'amélioration du contact gazeau provenant du mélange dynamique, d'un cisaillement probable des bulles gazeuses par les turbines, et/ou de l'entretien de la dynamique de recirculation par l'effet d'entraînement moteur des turbines.

Avantageusement, au moins une desdites chambres présente une forme à symétrie de révolution, notamment cylindrique ou biconique.

Dans une caractéristique préférentielle de l'invention, lesdites pales et/ou lesdites contrepales sont préférentiellement formées dans une feuille de métal déployé, de façon à présenter un aspect de grillage, dont l'orientation des lanières lui confère une transparence variable suivant l'incidence du flux.

Avantageusement, les contrepales sont constituées d'éléments de plaques fixées à la paroi de la chambre centrale selon une répartition symétrique, de façon à contrarier la rotation de fluide induite par les turbines. Lesdits éléments de plaques sont préférentiellement orientés en contresens de la rotation des turbines, selon un angle de 60° environ par rapport à la tangente locale à la paroi de la chambre.

Selon un autre mode de réalisation, les contrepales sont montées à articulation dans ladite chambre, de façon à être soit rabattues en position escamotée, soit verrouillées en position saillante de travail.

Dans un mode de réalisation avantageux de l'invention, l'installation comporte au moins un point d'injection du fluide de traitement, situé entre les turbines. Le cas échéant, elle comporte une pluralité de points d'injection du fluide de traitement, étagés selon l'axe de l'installation, la répartition de l'injection de gaz oxydant étant effectuée en fonction de l'étagement des points d'injection.

Dans l'un ou l'autre cas, les points d'injection coopèrent avec des moyens d'injection appartenant au groupe comprenant des poreux, diffuseurs à venturi, mélangeurs statiques, ou autres.

Dans une disposition préférentielle, ladite cuve est disposée sensiblement verticalement, et en ce que lesdites turbines induisent une circulation du mélange fluide de haut en bas dans la chambre centrale. Dans ce cas, on peut prévoir des moyens d'admission du fluide à traiter dans la partie supérieure de ladite chambre centrale. Il est également possible de ménager une sortie d'évacuation du mélange dans le fond de la cuve, et de placer une plaque de déflexion montée à proximité de ladite sortie de façon à favoriser la recirculation dans la cuve des filets de fluide contenant des bulles.

Il serait également possible d'engendrer une circulation de bas en haut dans la cheminée centrale ; toutefois, dans ce cas, l'installation devra clairement être adaptée pour permettre la recirculation de la totalité du mélange de haut en bas dans la chambre extérieure, particulièrement si le mélange comprend une phase gazeuse.

Selon différentes variantes d'utilisation de l'installation suivant l'invention, on peut prévoir que :
- ledit mélange fluide est placé sous pression dans la cuve, le fluide de traitement étant introduit au moyen d'un dispositif à dépression tel qu'un hydro-injecteur ou une trompe à vide, et/ou d'un dispositif à compression tel que pompe, compresseur ou surpresseur à anneau liquide,
- ladite cuve est au moins partiellement immergée dans un réservoir de liquide à traiter, de façon à en effectuer, continuement ou cycliquement, un traitement partiel,
- au moins deux cuves selon l'invention sont associées de façon à fonctionner en parallèle ou en série.

D'autres caractéristiques et avantages de l'invention apparaîtront à la lecture de la description suivante de modes de réalisation préférentiels de l'invention, donnés à titre illustratif et non limitatif, et des dessins annexés dans les quels :
- la figure 1 est une vue en coupe verticale d'une mode de réalisation avantageux de l'installation suivant l'invention,
- la figure 2 est une vue en section horizontale de l'installation de la figure 1,
- les figures 3A, 3B, 3C illustrent l'effet de transparence variable au flux, fourni par les pales de turbines en métal déployé de l'invention, en fonction de l'angle d'attaque,
- la figure 4 est une courbe représentant l'influence du rapport air/eau sur le pourcentage résiduel d'ozone, obtenu dans un prototype d'une installation suivant l'invention,
- la figure 5 est une courbe représentant la variation de la puissance consommée pour entraîner les turbines en rotation, en fonction de la vitesse des turbines, dans un prototype d'une installation suivent l'invention,
- la figure 6 schématise l'utilisation d'une installation suivant l'invention en immersion partielle dans un réservoir de stockage d'eau potable.

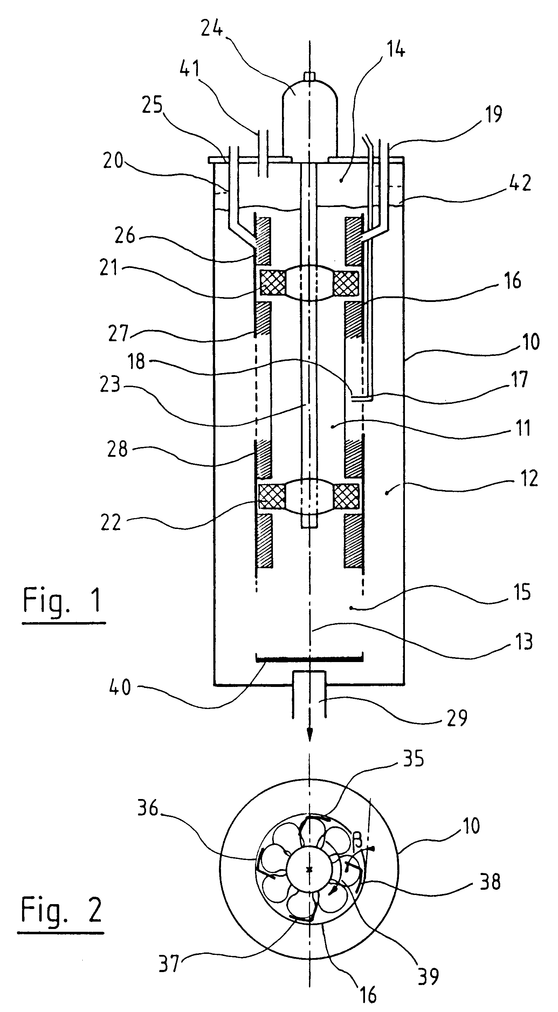

Le dispositif de la figure 1 est plus particulièrement conçu pour la mise en contact de liquides, et notamment d'eau potable ou d'eau résiduaire, avec un gaz de traitement.

Il peut être utilisé dans de nombreux domaines où il est nécessaire d'assurer un contact intime entre une phase liquide et une phase gazeuse, le cas échéant avec une durée minimale de contact prédéterminée. A titre d'exemple on peut notamment citer les opérations de désinfection, oxydation, désodorisation, ou décoloration de l'eau. D'autres applications apparaîtront également aisément à l'homme du métier, en particulier dans le traitement des eaux usées : urbaines, industries agro-alimentaires, pharmaceutiques, chimiques, etc, et également dans de nombreux procédés de fabrication industrielle.

Inversement, d'autres variantes de l'invention peuvent être conçues de manière à permettre le traitement d'un fluide par un autre fluide, ou encore d'un gaz par un liquide de transfert, tel que, notamment, H₂S, NH₃, SO₂ + eau, ...

Dans le cas présenté en figure 1, l'installation est constituée d'une cuve 10 comprenant deux chambres concentriques :
- une première chambre centrale 11, formant cheminée d'épuisement ;
- une seconde chambre périphérique annulaire 12, s'étendant coaxialement et parallèlement à la chambre centrale 11.

L'axe longitudinal 13 de la cuve s'étend verticalement.

Les deux chambres 11 et 12 communiquent aux deux extrémités de la cuve, par la zone de communication supérieure 14, et la zone de communication inférieure 15.

Le cas échéant, les ouvertures de communication sont également pratiquées dans la paroi 16 de séparation des deux chambres 11, 12, à des niveaux choisis en fonction de la dynamique souhaitée pour l'écoulement des fluides.

Dans le mode de réalisation représenté, et comme il est apparent en figure 2, la cuve 10, ainsi que la paroi de séparation 16, sont de forme cylindrique. D'autres formes sont envisageables, notamment une forme biconique, dont le diamètre minimal se trouverait sensiblement à mi-hauteur de la cuve (préférentiellement dans la cheminée centrale), de façon à créer un effet de vortex pour l'écoulement des fluides. Un effet analogue pourrait être également obtenu en rapportant une forme saillante annulaire intérieure (tel qu'un diaphragme) entre les turbines de la chambre.

La chambre centrale 11 héberge deux turbines 21, 22, entraînées en rotation par un arbre 23 d'axe 13. Un groupe moto-réducteur 24 est rapporté sur un couvercle 25 de fermeture de la cuve 10, pour entraîner l'arbre 23 et les turbines 21, 22 en rotation.

Avantageusement, les turbines présentent des pales ou aubes d'un profil propre à engendrer un phénomène de pompage du fluide présent dans la cheminée centrale 11. Les pales sont par exemple au nombre de huit ou de douze, mais toute autre valeur adéquate peut également être utilisée en fonction de la configuration souhaitée.

Selon une caractéristique avantageuse de l'invention, les pales sont avantageusement ajourées. Ceci par exemple est réalisé en formant les pales des turbines dans des feuilles en métal déployé, de façon qu'elles présentent un aspect de grillage.

Cette opération consiste généralement à réaliser des entailles régulières dans une feuille de métal, puis à étirer la feuille entaillée, avec éventuellement une mise en forme spécifique, de façon à créer dans la feuille métallique des ouvertures régulières dont les bords prennent une orientation et une conformation prédéterminée.

Cette caractéristique confère aux pales une "transparence" variable selon l'incidence de la veine fluide traversant la chambre centrale 11.

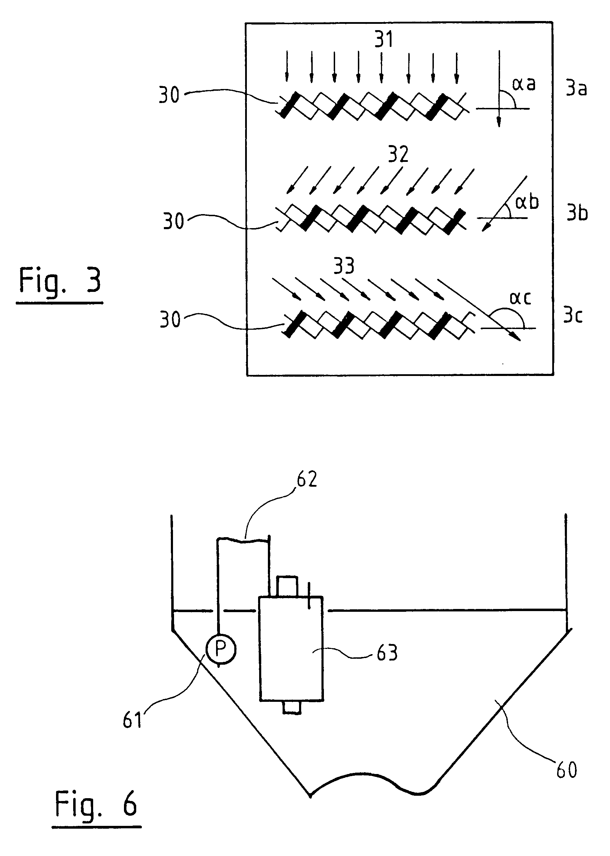

Ce phénomène de transparence variable est illustré en figure 3. Pour une disposition donnée de la pale ajourée 30, représentée ici en profil plan, pour des raisons de simplification, on a représenté trois incidences de flux correspondant à trois valeurs de transparence distinctes :
- en figure 3A, l'angle αₐ d'incidence est perpendiculaire au plan des pales en métal déployé, qui oppose une transparence frontale partielle au flux 31 ;
- en figure 3B, l'incidence α_{b} du flux 32 est orientée selon une direction pour laquelle les pales offrent une transparence maximale ;
- au contraire, en figure 3C, l'angle d'incidence α_{c} correspond à une occultation du flux dans la direction considérée.

Grâce à cette configuration des pales de turbine, on cumule plusieurs avantages. On évite la coalescence du gaz dissous sur les pales. On provoque, dans certaines conditions, un fractionnement des bulles, par l'effet de cisaillement intense au niveau de tous les bords d'attaque des tôles ajourées. On provoque des cassures intenses des filets liquides, en favorisant notamment la formation de tourbillons au sein desquels les bulles de gaz sont retenues et progressivement dissoutes dans le liquide. D'autres effets résultant de la configuration se produisent vraisemblablement, et sont à l'origine de l'efficacité constatée du dispositif.

Dans des modes de réalisations plus sophistiqués, on peut réaliser chaque pale par superposition de plusieurs feuilles en métal déployé, de "transparence" identique ou différente, ou toute autre configuration permettant d'accroître l'effet de l'installation.

Avantageusement, les turbines 21, 22 coopèrent avec des contrepales 26, 27, 28 rapportées sur la face interne de la cloison 16 de séparation des chambres 11, 12. Ces contrepales 26, 27, 28 sont interposées entre les turbines 21, 22, de façon à jouer un effet en amont et en aval des pales rotatives des turbines 21, 22.

Comme représenté en figure 2, ces contrepales sont avantageusement formées de portions de plaques 35, 36, 37, 38, réparties symétriquement autour de l'axe 13 de l'installation, et repliées de façon à présenter une partie saillant vers l'intérieur de la chambre 11. Avantageusement, la partie saillante des plaques formant contrepale présentent un angle β d'une valeur comprise entre 45° et 90°, avantageusement 60°, par rapport à la tangente à la paroi.

Ces contrepales sont orientées ainsi à contresens du sens de rotation 39 des turbines 21, 22. Il en résulte un effet accru de cisaillement des filets liquides, de fractionnement des bulles. Cette disposition empêche en outre la coalescence du gaz, en provoquant des tourbillons qui empêchent la formation de poches gazeuses sur ou entre les turbines.

Les contrepales sont préférentiellement au nombre de quatre, mais tout autre nombre, et configuration, aboutissant à un résultat similaire ne sort pas du cadre de la présente invention.

Dans une variante avantageuse de réalisation, non représentée, les contrepales sont montées de façon articulée sur la paroi de la chambre centrale 11. De cette façon, elles peuvent évoluer entre deux positions :
- une position escamotée, dans laquelle les contrepales sont rabattues le long de la paroi, afin de dégager le passage, par exemple pour permettre la mise en place ou le retrait des turbines 21, 22 :
- une position déployée, dans laquelle les contrepales sont verrouillées, lors du fonctionnement du système en régime normal.

Avantageusement, les contrepales sont ajourées, par exemple en étant constituées dans des feuilles en métal déployé.

Préférentiellement, le sens de rotation 39 des turbines est conçu de façon à provoquer une circulation du mélange de traitement de haut en bas dans la cheminée centrale 11, et de bas en haut dans la chambre annulaire périphérique 12.

Toutefois, un sens de circulation inversé n'est pas exclu dans certaines applications.

Les turbines sont avantageusement entraînées à la même vitesse de rotation. Toutefois, au prix d'un dispositif d'entraînement plus complexe, on peut envisager des vitesses de rotation distinctes, en fonction des effets recherchés.

La cheminée centrale 11 comporte des moyens d'injection 17 du gaz de traitement. Le point d'injection 18 des gaz est avantageusement situé sensiblement à mi-chemin entre les deux turbines 21, 22 et sont en tout état de cause localisés là où la vitesse linéaire des filets de fluide est la plus forte, c'est-à-dire généralement à proximité de la périphérie de la chambre. La distance d'écartement des turbines et la localisation du point d'injection 18 sont à déterminer en fonction des performances attendues, de la configuration générale de l'installation, de la vitesse de rotation des turbines, et de la vitesse circulation du mélange de traitement.

Le cas échéant, il est possible de prévoir une répartition des points d'injection sur tout ou partie du contour périphérique circulaire de la paroi 16, au même niveau.

Dans une autre variante, on peut étager les points d'injection sur plusieurs niveaux distincts, le long de la cheminée centrale 11. Dans ce cas, il est alors possible de moduler le taux de gaz traitement injecté en fonction de la hauteur de chaque point d'injection dans la cheminée : les points d'injection les plus élevés, donc les plus en amont du flux, fournissent alors avantageusement davantage de gaz de traitement que les points situés en aval du flux.

La quantité de gaz introduite dépend d'un grand nombre de paramètres, qui seront ajustés par l'homme du métier.

A titre d'exemple, on peut citer la concentration finale désirée, le taux et le temps de traitement recherchés. Le débit de gaz introduit, le rapport air/eau, et la concentration en gaz oxydant dans le gaz introduit seront alors adaptés notamment en fonction de la vitesse de rotation des turbines, de la vitesse de circulation du flux dans le dispositif, du caractère tourbillonnaire du flux, du taux de transfert obtenu, etc.

L'installation comprend également des tubulures 19, 20 d'admission du liquide à traiter dans la chambre centrale. Cette admission s'effectue avantageusement dans la partie supérieure de la chambre centrale, au niveau des contrepales 26.

Les tubulures 19, 20 sont au nombre de deux ou davantage, préférentiellement réparties symétriquement autour de l'axe 13. A la place de ces tubulures, on peut également envisager une admission du liquide de traitement par tout autre moyen, par exemple à l'aide d'un déversoir annulaire (non représenté).

Dans la partie inférieure de l'installation est ménagée un orifice 29 d'évacuation du mélange de traitement. A proximité de l'orifice d'évacuation 29 est placée une plaque de déflection 40, qui favorise la recirculation des filets du mélange de traitement dans la cuve 10, avant leur évacuation. Cette plaque 40 a également pour objectif de réorienter la circulation des bulles de gaz de traitement non épuisé à l'intérieur de la cuve.

Un ou plusieurs évents 41 peuvent être ménagés dans la partie supérieure de la cuve 10.

Dans le cas du traitement des eaux, le gaz utilisé est avantageusement l'ozone. Il est généralement introduit dans une concentration prédéterminée dans un mélange gazeux avec de l'air.

Dans un autre mode de réalisation, le fluide de traitement peut-être également l'ozone dissous dans H₂0₂ ou tout autre fluide moteur, oxydant ou non. Dans ce cas, le fluide moteur sert à la dissolution préalable de l'ozone (ou d'un autre gaz de traitement) situé en amont de la tubulure 17.

Dans d'autres applications, le fluide de traitement peut être différent. A titre d'exemple, on pourrait introduire de l'oxygène, du chlore, du dioxyde de carbone, ou encore du dioxyde de soufre, dans d'autres types d'installation de traitement des eaux.

On peut également envisager, notamment pour le traitement des eaux chargées en matières organiques, d'injecter parallèlement des doses déterminées de réactifs chimiques et/ou d'adsorbants, tels que du charbon actif.

D'une manière générale, la nature du dispositif d'injection du fluide de traitement n'est pas une caractéristique limitative de l'invention : on peut utiliser, suivant le cas, des poreux, des diffuseurs à diaphragme ou à venturi, et tout autre appareil adéquat connu de l'homme du métier.

Les quantités et débits du milieu de traitement sont avantageusement stabilisés de façon à obtenir un niveau 42 prédéterminé stable dans la cuve. Ce niveau 42 est choisi de façon à n'être ni trop haut ni trop bas, de façon à minimiser l'effet de dégazage du milieu de traitement lors du passage de la chambre annulaire 12 à la chambre centrale 11; les trajets des bulles doivent en effet, dans la mesure du possible, éviter d'intersecter la surface 42.

De la même manière, il faudra optimiser le rapport air/eau, en relation avec la vitesse de rotation des turbines. Si trop de gaz est introduit dans l'installation, on constatera en effet un engorgement d'air dans les turbines, les bulles de gaz seront alors trop grosses pour être fractionnées, formeront des poches, et seront difficilement dissoutes dans le milieu de traitement. Inversement, l'injection d'une quantité insuffisante de gaz ne permettra d'obtenir qu'un rendement médiocre pour le traitement des eaux.

Des essais ont été réalisés dans une maquette à échelle réduite d'une installation telle que représentée en figure 1. La cuve 10 présentait une hauteur d'environ 160 cm, pour un diamètre d'environ 30 cm.

La paroi 16 de séparation des deux chambres 11, 12 s'étendait sur une hauteur de 100 cm, à 40 cm au-dessus du fond de la cuve. Les deux turbines de douze pales chacune étaient respectivement situées à 40 cm et à 85 cm environ du bas de la cloison 16. L'injection d'ozone s'effectuait à environ 15 cm au-dessus de la turbine inférieure.

Le diamètre intérieur de la chambre centrale était d'environ 19 cm, le diamètre hors tout des turbines étant de 18 cm.

Les conditions d'expérimentation ont consisté à traiter 8 m³ d'eau par heure ; après 42 secondes de temps de séjour moyen, on a constaté qu'un taux de traitement de 1,2 mg/l laisse un résiduel de 0,9 mg/l dans le milieu de traitement pour un rapport air/eau de 3,5 % environ, ce qui correspond à un rendement de transfert proche de 90 %.

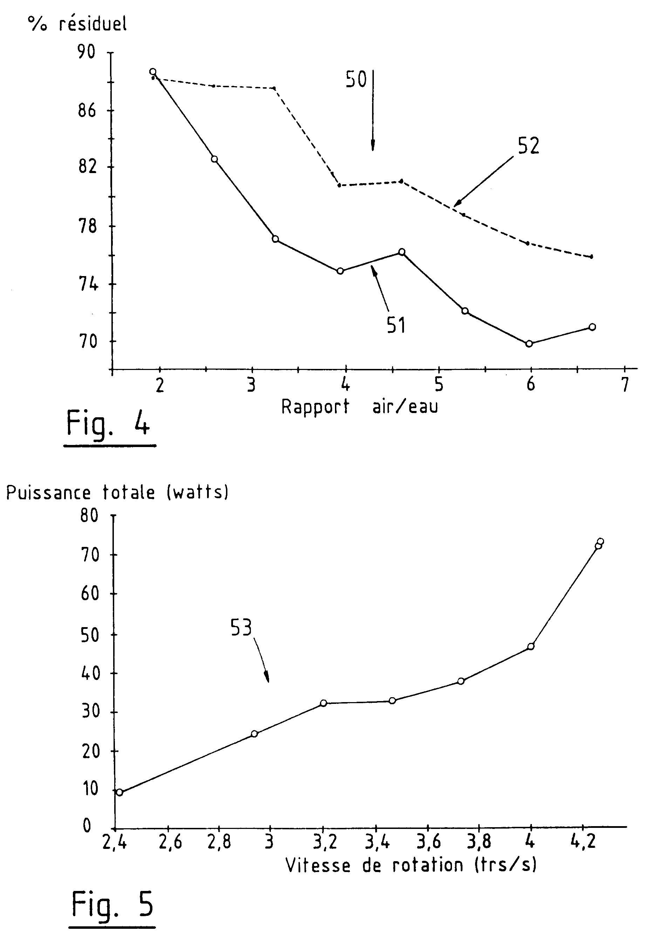

Lors de la mise en fonctionnement de ce dispositif, on a constaté des phénomènes intéressants de paliers notamment dans les deux courbes suivantes :
- la courbe de l'influence du rapport air/eau sur le pourcentage résiduel d'ozone dissous par rapport à l'ozone injecté (fig. 4),
- la puissance totale d'entraînement à rotation des turbines en fonction de la vitesse de rotation des turbines (fig. 5).

Plus précisément, on constate un palier 50, pour une valeur du rapport air/eau compris entre 3 et 5 % (en volume), aux alentours de 76 % de gaz dissous par rapport au gaz injecté. (Courbe 51). La courbe 52, correspondant au rendement de transfert, présente un palier pour les mêmes valeurs du rapport air/eau.

D'autre part, la courbe 53 de la figure 5 fait apparaître un palier pour des vitesses de rotation comprises entre 3,1 et 3,8 tours par seconde, quant à la puissance totale consommée pour l'entraînement en rotation des turbines (aux alentours de 30-40 Watts). En-deçà de ces vitesses de rotation, on constate un phénomène de pulsation, dans lequel des poches d'air se forment sous les turbines du fait de leur vitesse de rotation insuffisante, puis s'échappent périodiquement au-delà d'un certain volume de la poche.

Les études menées ont permis de constater que l'installation permet un fort gain énergétique par rapport aux installations existantes, du point de vue de la puissance nécessaire (pour l'entraînement en rotation des turbines) pour obtenir un gain donné de dissolution d'ozone (4 Watt.heure/m³ pour dissoudre un gramme d'ozone, dans le prototype réalisé).

D'autre part, on a également constaté que l'efficacité du transfert de mesure correspondant au passage du fluide à traiter dans l'installation de l'invention est nettement supérieure à celle obtenue dans des installations classiques de volume et de débit équivalents.

L'installation de l'invention peut être utilisée dans différentes configurations.

A titre d'exemple, il est possible de placer sous pression le mélange de traitement contenu dans la cuve, de façon à accroître encore le rendement du transfert du gaz de traitement. Celui-ci est alors avantageusement introduit sous la forme d'une émulsion eau + gaz au moyen d'hydro-injecteurs, ou de mélangeurs statiques, ou sous forme gazeuse monophasique à l'aide d'un compresseur à anneau liquide ou équivalent.

L'installation de l'invention peut être utilisée également pour effectuer un réenrichissement de l'eau traitée, après le contacteur d'une chaîne de traitement existante.

Plusieurs installations peuvent être utilisées en parallèle pour traiter de forts débits.

Dans le mode de réalisation représenté en figure 6, l'installation est immergée au moins partiellement dans un réservoir de stockage d'eau. L'eau stockée 60 est partiellement recyclée à travers une pompe 61 et une tubulure d'admission 62 dans l'installation 63 selon l'invention. Ceci permet la régénération partielle de l'eau stockée. L'immersion de l'installation permet en outre de réduire l'encombrement accaparé.

## Revendications

1. Installation de mélange de deux phases fluides, notamment d'un fluide de traitement avec un fluide à traiter caractérisée en ce qu'elle est constituée d'une cuve (10) comprenant deux chambres parallèles concentriques, communiquant entre elles au moins par leurs extrémités (14,15),
et en ce que la chambre centrale (11) est pourvue :
- d'une part d'au moins deux turbines étagées (21,22), dont l'axe de rotation (13) se confond avec l'axe de symétrie de l'installation et, dont les pales sont en tôles ajourées
- d'autre part de structures (28) formant contrepales placées en position alternée avec les turbines (21,22).

2. Installation selon la revendication 1 caractérisée en ce qu'au moins une desdites chambres (11,12) présente une forme à symétrie de révolution, notamment cylindrique ou biconique.

3. Installation selon la revendication 1 ou 2 caractérisée en ce que lesdites pales et/ou lesdites contrepales sont formées dans une feuille de métal déployé, de façon à présenter un aspect de grillage, dont l'orientation des lanières lui confère une transparence variable suivant l'incidence du flux.

4. Installation selon l'une quelconque des revendications 1 à 3 caractérisée en ce qu'elle comprend des moyens (24) d'entraînement desdites turbines en rotation.

5. Installation selon l'une quelconque des revendications 1 à 4 caractérisée en ce que les contrepales sont constituées d'éléments de plaques (35,36,37,38) fixés à la paroi (16) de la chambre centrale (11) selon une répartition symétrique, de façon à contrarier la rotation de fluide induite par les turbines (11,12).

6. Installation selon la revendication 5 caractérisée en ce que lesdits éléments de plaques (35,36,37,38) sont orientés en contresens de la rotation des turbines, selon un angle de 60° environ par rapport à la tangente locale à la paroi (16) de la chambre (11).

7. Installation selon l'une quelconque des revendications 1 à 4 caractérisée en ce que les contrepales sont montées à articulation dans ladite chambre (11), de façon à être soit rabattues en position escamotée, soit verrouillées en position saillante de travail.

8. Installation selon l'une quelconque des revendications 1 à 7 caractérisée en ce qu'elle comporte au moins un point (18) d'injection du fluide de traitement, situé entre les turbines.

9. Installation selon l'une quelconque des revendications 1 à 8 caractérisée en ce qu'elle comporte une pluralité de points (18) d'injection du fluide de traitement, étagés selon l'axe de l'installation, la répartition de l'injection de gaz oxydant étant effectuée en fonction de l'étagement des points d'injection.

10. Installation selon l'une quelconque des revendications 8 et 9 caractérisée en ce que les points d'injection (18) coopèrent avec des moyens d'injection appartenant au groupe comprenant des poreux, diffuseurs à venturi, des mélangeurs statiques.

11. Installation selon l'une quelconque des revendications 1 à 10 caractérisée en ce que ladite cuve (10) est disposée sensiblement verticalement, et en ce que lesdites turbines (11,12) induisent une circulation du mélange fluide de haut en bas dans la chambre centrale.

12. Installation selon la revendication 11 caractérisée en ce qu'elle comprend des moyens (19) d'admission du fluide à traiter dans la partie supérieure de ladite chambre centrale.

13. Installation selon l'une quelconque des revendications 11 et 12 caractérisée en ce qu'elle comprend une sortie (29) d'évacuation du mélange dans le fond de la cuve (10), et en ce qu'une plaque de déflexion (40) est montée à proximité de ladite sortie (29) de façon à favoriser la recirculation, dans la cuve (10), des filets de fluide contenant des bulles.

14. Installation selon l'une quelconque des revendications 1 à 13 caractérisée en ce qu'elle comprend au moins deux cuves (10) fonctionnant en parallèle.

15. Installation selon l'une quelconque des revendications 1 à 14 caractérisée en ce que ledit fluide à traiter est une eau stockée, une eau usée, et/ou une eau filtrée.

16. Installation selon l'une quelconque des revendications 1 à 15 caractérisée en ce que ledit fluide de traitement est un fluide oxydant appartenant au groupe comprenant l'ozone, H₂O₂, ou un mélange de ces fluides entre eux et/ou avec un fluide porteur tel que l'air.

17. Utilisation d'une installation selon l'une quelconque des revendications 1 à 16 caractérisée en ce que ledit mélange fluide est placé sous pression dans la cuve (10), le fluide de traitement étant introduit au moyen d'un dispositif à dépression tel qu'un hydro-injecteur ou une trompe à vide et/ou d'un dispositif à comression tel qu'une pompe à anneau fluide.

18. Utilisation d'une installation selon l'une quelconque des revendications 1 à 17 caractérisée en ce que ladite cuve est au moins partiellement immergée dans un réservoir de liquide à traiter (60), de façon à en effectuer, continûment ou cycliquement, un traitement partiel.

## Claims

1. Means for mixing two fluid phases, in particular a treatment fluid with a fluid requiring treatment, characterised in that it comprises a vessel (10) comprising two parallel concentric chambers which communicate with each other at least at their ends (14, 15),
and in that the central chamber (11) is provided:
- on the one hand with at least two turbines (21, 22) one above the other, having an axis of rotation (13) which is the same as the axis of symmetry of the means, and of which the blades are of perforated sheet,
- and on the other, with structures (28) forming counter-blades placed in an alternating position with the turbines (21, 22).

2. Means according to claim 1, characterised in that at least one of the said chambers (11, 12) has a shape which is symmetrical in revolution, in particular a cylindrical or biconical shape.

3. Means according to claim 1 or 2, characterised in that the said blades and/or the said counter-blades are formed from expanded metal sheet, so as to have the form of a grid, in which the orientation of the strips confers variable transparency according to the incidence of the flow.

4. Means according to any one of claims 1 to 3, characterised in that it comprises means (24) for driving the said turbines in rotation.

5. Means according to any one of claims 1 to 4, characterised in that the counter-blades comprise plate members (35, 36, 37, 38) fixed to the wall (16) of the central chamber (11) in a symmetrical arrangement so as to oppose the rotation of the fluid induced by the turbines (11, 12).

6. Means according to claim 5 characterised in that the said plate members (35, 36, 37, 38) are orientated contrary to the direction of rotation of the turbines, at an angle of approximately 60° with respect to the local tangent to the wall (16) of the chamber (11).

7. Means according to any one of claims 1 to 4, characterised in that the counter-blades are hinge-mounted in the said chamber (11) so as to be folded back into a retracted position or locked into a projecting working position.

8. Means according to any one of claims 1 to 7, characterised in that it comprises at least one injection point (18) for the treatment fluid located between the turbines.

9. Means according to any one of claims 1 to 8, characterised in that it comprises a plurality of injection points (18) for the treatment fluid in tiers in relation to the axis of the installation, the oxidising gas injection being distributed in relation to the tiers of injection points.

10. Means according to either of claims 8 and 9, characterised in that the injection points (18) act together with injection means belonging to the group comprising porous injectors, Venturi diffusers and static mixers.

11. Means according to any one of claims 1 to 10, characterised in that the said vessel (10) is arranged substantially vertically, and in that the said turbines (11, 12) induce a circulation of the fluid mixture from top to bottom in the central chamber.

12. Means according to claim 11, characterised in that it comprises means (19) for delivering the fluid requiring treatment to the upper part of the said central chamber.

13. Means according to either of claims 11 and 12, characterised in that it comprises an outlet (29) for discharging the mixture from the base of the vessel (10), and in that a deflection plate (40) is mounted in the vicinity of the said outlet (29) in such a way as to encourage recirculation of the streams of fluid containing bubbles in the vessel (10).

14. Means according to any one of claims 1 to 13, characterised in that it comprises at least two vessels (10) functioning in parallel.

15. Means according to any one of claims 1 to 14, characterised in that the said fluid requiring treatment is stored water, wastewater, and/or filtered water.

16. Means according to any one of claims 1 to 15, characterised in that the said treatment fluid is an oxidising fluid belonging to the group comprising ozone, H₂O₂ or a mixture of these fluids and/or a mixture of these fluids with a carrier fluid such as air.

17. Use of means according to any one of claims 1 to 16, characterised in that the said fluid mixture is pressurised in the vessel (10), and the treatment fluid is introduced by means of a pressure reducing device such as a hydroinjector or a liquid jet vacuum pump and/or a compression device such as a fluid ring pump.

18. Use of means according to any one of claims 1 to 17, characterised in that the said vessel is at least partly immersed in a tank of the liquid requiring treatment (60) so that partial treatment is performed continually or cyclically.

## Patentansprüche

1. Anlage zur Vermischung zweier Fluide, insbesondere einem Behandlungsfluid mit einer zu behandelnden Fluid,
dadurch gekennzeichnet, daß sie aus einem Gefäß (10) besteht, welches zwei parallel konzentrische Kammern enthält, die mindestens über ihre Enden (14, 15) miteinander verbunden sind,
und daß die mittlere Kammer (11) folgendes enthält:
- einerseits mindestens zwei in Stufen angeordnete Turbinen (21, 22), deren Drehachse (13) sich mit der Symmetrieachse der Anlage überdeckt und deren Schaufeln aus durchbrochenem Blech sind;
- anderseits Strukturen (28), die Gegenschaufeln bilden und abwechselnd zu den Turbinen (21, 22) angebracht sind.

2. Anlage gemäß Anspruch 1,
dadurch gekennzeichnet, daß mindestens eine der Kammern (11, 12) eine rotationssymmetrische Form aufweist, insbesondere zylindrisch oder doppelkegelförmig.

3. Anlage gemäß Anspruch 1 oder 2,
dadurch gekennzeichnet, daß die Schaufeln und/oder die Gegenschaufeln aus Streckmetall hergestellt sind, um wie ein Gitter zu wirken, wobei die Orientierung der Streifen je nach Flußrichtung diesem Gitter eine veränderte Durchlässigkeit verleiht.

4. Anlage gemäß einem der Ansprüche 1 bis 3,
dadurch gekennzeichnet, daß sie über Mittel (24) zum Antreiben der Drehbewegung der Turbinen verfügt.

5. Anlage gemäß einem der Ansprüche 1 bis 4,
dadurch gekennzeichnet, daß die Gegenschaufeln aus Plattenelementen (35, 36, 37, 38) bestehen, die symmetrisch verteilt an der Wand (16) der mittleren Kammer (11) befestigt sind, um der von den Turbinen (11, 12) induzierten Rotationsfließbewegung der Fluide entgegenzuwirken.

6. Anlage gemäß Anspruch 5,
dadurch gekennzeichnet, daß die Plattenelemente (35, 36, 37, 38) entgegengesetzt zur Drehbewegungsrichtung der Turbinen angebracht sind, unter einem Winkel von etwa 60° gegenüber der örtlichen Tangente zur Wand (16) der Kammer (11).

7. Anlage gemäß einem der Ansprüche 1 bis 4,
dadurch gekennzeichnet, daß die Gegenschaufeln über Gelenke in der Kammer (11) angebracht sind, um entweder in Ausweichsstellung zurückgeklappt oder in vorstehender Arbeitslage verriegelt zu werden.

8. Anlage gemäß einem der Ansprüche 1 bis 7,
dadurch gekennzeichnet, daß sie mindestens eine Einspeisestelle (18) für das Behandlungsfluid umfaßt, die sich Zwischen den Turbinen befindet.

9. Anlage gemäß einem der Ansprüche 1 bis 8,
dadurch gekennzeichnet, daß sie eine Vielzahl von Einspeisestellen (18) für das Behandlungsfluid umfaßt, die entlang der Anlagenachse stufenweise angeordnet sind, wobei die Verteilung der Einspeisung des oxydierenden Gases als Funktion der Anordnung der Einspeisestellen erfolgt.

10. Anlage gemäß einem der Ansprüche 8 oder 9,
dadurch gekennzeichnet, daß die Einspeisestellen (18) mit Einspeisestellen zusammenwirken, die der Gruppe angehören, welche poröse Körper, Auströmräume mit Venturidüsen und statische Mischer umfaßt.

11. Anlage gemäß einem der Ansprüche 1 bis 10,
dadurch gekennzeichnet, daß das Gefäß (10) in etwa vertikal angeordnet ist, und daß die Turbinen (11, 12) eine Zirkulation der flüssigen Mischung von oben nach unten in der mittleren Kammer induzieren.

12. Anlage gemäß Anspruch 11,
dadurch gekennzeichnet, daß sie über Einlaßmittel (19) für die zu behandelnde Fluids am oberen Teil der mittleren Kammer verfügt.

13. Anlage gemäß einem der Ansprüche 11 oder 12,
dadurch gekennzeichnet, daß sie über einen Abfluß (29) für die Mischung am Boden des Gefäßes (10) verfügt, und daß eine Ablenkplatte (40) in der Nähe dieses Abflusses (29) angebracht ist, um das Rezirkulieren von blasenhaltigen Flüssigkeitssträngen im Gefäß (10) zu begünstigen.

14. Anlage gemäß einem der Ansprüche 1 bis 13,
dadurch gekennzeichnet, daß sie mindestens zwei Gefäße (10) umfaßt, die parallel zueinander betrieben werden.

15. Anlage gemäß einem der Ansprüche 1 bis 14,
dadurch gekennzeichnet, daß es sich bei dem zu behandelnden Fluid um gelagertes Wasser, um Abwasser und/oder um filtriertes Wasser handelt.

16. Anlage gemäß einem der Ansprüche 1 bis 15,
dadurch gekennzeichnet, daß das Behandlungsmittel ein oxydierendes Fluid aus der Gruppe ist, die Ozon, H₂O₂ oder eine Mischung dieser Stoffe untereinander und/oder mit einem Träger wie Luft umfaßt.

17. Anwendung einer Anlage gemäß einem der Ansprüche 1 bis 16,
dadurch gekennzeichnet, daß die Fluidmischung sich im Gefäß (10) unter Druck befindet, wobei das Behandlungsfluid über ein Unterdrucksystem eingespeist wird, wie zum Beispiel eine Hydroeinspritzung oder eine Fluidstrahlpumpe und/oder über ein Kompressionssystem wie eine Fluidringpumpe.

18. Anwendung einer Anlage gemäß einem der Ansprüche 1 bis 17,
dadurch gekennzeichnet, daß das Gefäß mindestens teilweise in einem Behälter (60) mit zu behandelnder Flüssigkeit eingetaucht ist, um eine stetige oder zyklische Teilbehandlung durchzuführen.
